# EUROPEAN PATENT APPLICATION

(11) **EP 4 582 999 A1**
(43) Date of publication of application: **09.07.2025**
(21) Application number: 24222858.3
(22) Date of filing: 23.12.2024
(51) Int. Cl.: G06N 3/006, G06N 7/01

(54) **MACHINE COGNITION WORKFLOW ENGINE**

(30) Priority: 05.01.2024 US 202418406037
(71) Applicant: Microsoft Technology Licensing, LLC, Redmond, WA 98052 (US)
(72) Inventor: Krabach, Brian Scott, Redmond (US); Schillace, Samuel Edward, Redmond (US); Madan, Umesh, Redmond (US)
(74) Representative: CMS Cameron McKenna Nabarro Olswang LLP

(57) **Abstract**

A machine cognition workflow engine and a recommendation subsystem are provided in a computing system. The workflow engine receives a plurality of prompts, extracts a message and a context of each of the plurality of prompts, for each prompt, generates a workflow instance according to a recommended workflow definition that specifies a plurality of calls to one or more components, and for each prompt, executes the generated workflow instance to perform the calls to the one or more components to thereby generate responses for the plurality of prompts. The recommendation subsystem evaluates the responses to generate a score for each response generated by the workflow instances, receives a request from the machine cognition workflow engine for the recommended workflow definition for a current prompt, and outputs the recommended workflow definition to the machine cognition workflow engine based on the scores of responses generated by the workflow instances.

## Description

### BACKGROUND

Recently, large language models (LLMs) have been developed that generate natural language responses in response to prompts entered by users. LLMs are incorporated into chatbots, which are computer programs designed to interact with users in a natural, conversational manner. Chatbots facilitate efficient and effective interaction with users, often for the purpose of providing information or answering questions.

However, conventional online chatbots, which interact with users, often face significant shortcomings. One of the primary limitations is the lack of a feedback mechanism that enables these systems to learn over time based on user interactions. When these online chatbots are assigned tasks, they attempt to fulfill them based on predefined algorithms and data. However, in the absence of a feedback process, these systems cannot evolve or adapt based on new experiences or user interactions.

This lack of learning from prior experiences limits the ability of conventional bots to refine their approach to task fulfillment. Each interaction is treated in isolation, without the benefit of insights gained from past interactions. Consequently, these systems often fail to develop a more nuanced understanding of user preferences, common requests, or effective strategies for task completion.

Furthermore, conventional chatbots lack the capability to keep track of strategies that have been successful in fulfilling past tasks. This limitation hinders their ability to apply successful approaches to similar tasks in the future. Without this historical perspective, chatbots are unable to build a repertoire of effective strategies, making them less efficient and potentially leading to unfulfilling interactions with users.

In other words, while conventional online chatbots offer a level of interaction with users, their inability to learn from past interactions and adapt their strategies accordingly poses a significant limitation. This results in a static user experience, lacking personalization and continuous learning.

### SUMMARY

To address the above issues, a computing system is provided, comprising a machine cognition workflow engine and a machine cognition workflow evaluation and recommendation subsystem. The machine cognition workflow engine is configured to receive a plurality of prompts, extract a message and a context of each of the plurality of prompts, for each prompt, generate a workflow instance according to a recommended workflow definition that specifies a plurality of calls to one or more components, and for each prompt, execute the generated workflow instance to perform the calls to the one or more components to thereby generate responses for the plurality of prompts. The machine cognition workflow evaluation and recommendation subsystem includes a response evaluation module configured to evaluate the responses to generate a score for each response generated by the workflow instances, and a workflow recommendation module configured to receive a request from the machine cognition workflow engine for the recommended workflow definition for a current prompt, and output the recommended workflow definition to the machine cognition workflow engine based on the scores of responses generated by the workflow instances.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a schematic view showing a computing system according to a first example implementation, which uses a machine cognition workflow engine to generate a response to a prompt.
Fig. 2 is a detailed schematic view of the computing system of Fig. 1, further showing, in detail, the processes executed by the machine cognition workflow engine and the machine cognition workflow evaluation and recommendation subsystem.
Fig. 3 is a detailed schematic view showing the components of the machine cognition workflow instance making calls to agent services in the computing system of Figs. 1 and 2.
Fig. 4 is a schematic view of an example machine cognition workflow instance which executes the reordering of medications in the computing system of Figs. 1 and 2.
Fig. 5 shows a flowchart for a first method for managing workflows according to one example implementation.
Fig. 6 shows a flowchart for a second method for managing workflows according to one example implementation.
Fig. 7 shows a schematic view of an example computing environment in which the computing system of Figs. 1-3 may be enacted.

### DETAILED DESCRIPTION

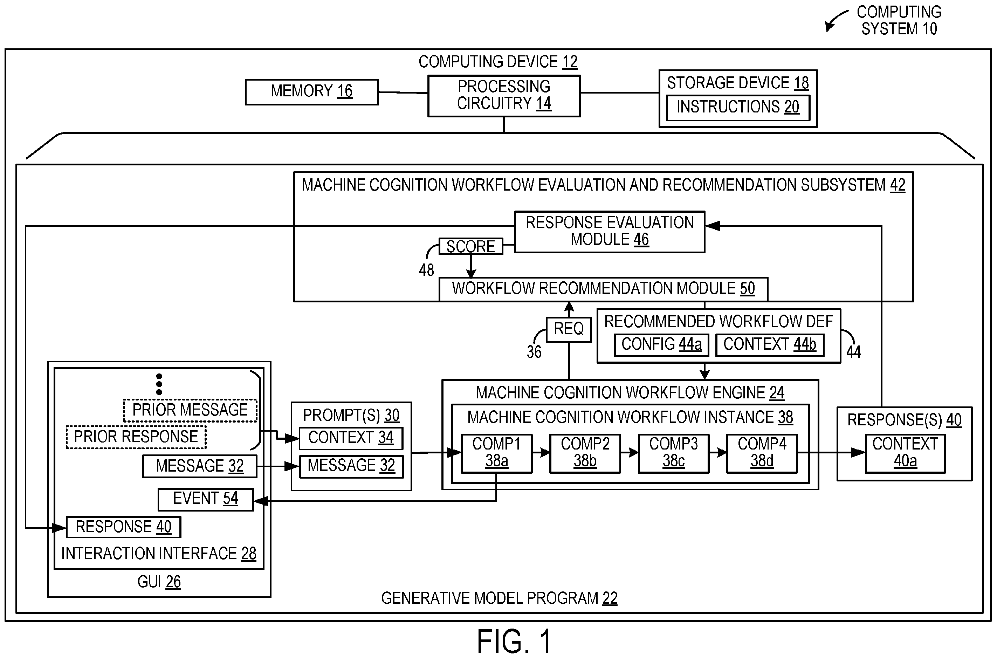

To address the issues described above, Fig. 1 illustrates a schematic view of a computing system 10 for managing workflows, according to a first example implementation. The computing system 10 includes a computing device 12 having processing circuitry 14, memory 16, and a storage device 18 storing instructions 20. In this first example implementation, the computing system 10 takes the form of a single computing device 12 storing instructions 20 in the storage device 18, including a generative model program 22 that is executable by the processing circuitry 14 to perform various functions including executing a machine cognition workflow engine 24 to cause an interaction interface 28 to be presented, receive, via the interaction interface 28, one or a plurality of prompts 30 from the user, and extract a message 32 and a context 34 of each of the plurality of prompts 30.

In some instances, the interaction interface 38 may be a portion of a graphical user interface (GUI) 26 for accepting user input and presenting information to a user. It will be appreciated that the user input accepted by the interaction interface 38 is not particularly limited in scope or form. The prompts 30 accepted by the interaction interface 38 may encompass a wide array of multi-modal inputs or content, which may include, but are not limited to, textual data and image data, such a captured image of the user, an object, or the environment, or a stored image. In other instances, the interaction interface 38 may be presented in non-visual formats such as an audio interface for receiving and/or outputting audio, such as may be used with a digital assistant. Thus, the multi-modal inputs may include audio data such as voice commands, etc. In yet another example the interaction interface 38 may be implemented as an interaction interface application programming interface (API). In such a configuration, the input to the interaction interface 38 may be made by an API call from a calling software program to the interaction interface API, and output may be returned in an API response from the interaction interface API to the calling software program. The API may be a local API or a remote API accessible via a computer network such as the Internet.

It will be understood that distributed processing strategies may be implemented to execute the software described herein, and the processing circuitry 14 therefore may include multiple processing devices, such as cores of a central processing unit, co-processors, graphics processing units, field programmable gate arrays (FPGA) accelerators, tensor processing units, etc., and these multiple processing devices may be positioned within one or more computing devices, and may be connected by an interconnect (when within the same device) or via a packet switched network links (when in multiple computing devices), for example.

For each prompt 30, the workflow engine 24 generates a workflow instance 38 according to a recommended workflow definition 44 that specifies a plurality of calls to one or more components 38a-d. For each prompt, the workflow engine 24 executes the generated workflow instance 38 to perform the calls to the one or more components 38a-d to thereby generate responses 40 for the plurality of prompts 30. The generated responses 40 may be outputted to be displayed on the interaction interface 28.

A machine cognition workflow evaluation and recommendation subsystem 42 receives the generated responses 40 and generates the recommended workflow definition 44 based on the received responses 40. The recommendation subsystem 42 includes a response evaluation module 46 configured to evaluate the responses 40 to generate a score 48 for each response 40 generated by the workflow instances 38. The recommendation subsystem 42 also includes a workflow recommendation module 50 configured to receive a request 36 from the machine cognition workflow engine 24 for a recommended workflow definition 44 for a current prompt 30, and output the recommended workflow definition 44 to the machine cognition workflow engine 24 based on the scores of responses 40 generated by the workflow instances 38.

The recommended workflow definition 44 defines a sequence of components 38a-d in the workflow instance 38 that are to be executed by the workflow engine 24, starting with a trigger component 38a which marks the beginning of the sequence. Although four components 38a-d are depicted in Fig. 1, it will be appreciated that the number of executable components in the workflow instance 38 is not particularly limited, and may be fewer or greater than four components. As the workflow engine 24 executes the workflow instance 38, the context 34 of the prompt 30 is passed to each component 38a-d of the workflow instance 38, which may be read from or updated by each component 38a-d before being passed to the next component 38b-d in the workflow instance 38. A final context object 40a may be outputted in the response 40 when the workflow instance 38 is completed.

A component 38a-d in the workflow instance 38 may be a class that implements a method that accepts the recommended workflow definition 44 and a flow component object 38a-d in the recommended workflow definition 44. Components 38a-d may be configured simply as a few lines of code or configured elaborately as services. The recommended workflow definition 44 contains a configuration 44a and a current context 44b for the workflow instance 38, which is passed to each component 38a-d in the workflow instance 38. The flow component object 38a-d contains metadata including the component type, name, and configuration data, to allow the workflow engine 24 download the flow component objects 38a-d on demand. The method returns an updated flow component object 38a-d, which is passed to the next component in the workflow instance 38. The method may also return a "next" value, which is the key of the next component 38b-d in the workflow instance 38. If the "next" value is an "exit" value, the workflow instance 38 is completed and the final context object 40a is outputted in the response 40. A given component 38a-d can update the context, the configuration data, and the "next" values as needed, thereby allowing for dynamic flow control from both within the component 38a-d and the entire workflow instance 38.

Components 38a-d in the recommended workflow definition 44 are preferably configured to be as stateless as possible. In other words, the execution of a given component 38a-d in the workflow instance 38 is preferably independent of previous executions of the given component 38a-d. Alternatively, when components 38a-d are configured to hold an internal state from one execution to the next, the data for the internal state may be stored in the context 40a and/or separate persistent storage device 18. The data for the internal state may be stored in the context 40a when it is determined that the data for the internal state is needed for the duration of the workflow instance 38. When it is determined that the data for the internal state is needed for the duration of a session of multiple workflow instances, including the current workflow instance 38, then the data for the internal state may be stored in the persistent storage device 18.

In some examples the workflow instance 38 is configured to await completion of each component 38a-d in sequence. Alternatively, the workflow instance 38 may be configured to allow a component 38a-d to run in the background as a background process, and continue to the next component 38b-d in the flow sequence. A component 38a-d that is allowed to run in the background may include long-running processes or processes such as a memory extraction processes. A component 38a that is allowed to run in the background may be configured to emit an event 54 to display a notification on the interaction interface 28 of progress and/or completion of the workflow instance 38.

The event 54 may be emitted to connected clients via a Server-Sent Events (SSE) channel. The SSE channel may be managed by the main service, so that the event 54 may be emitted on any server or client via a dedicated endpoint that is configured to emit events. The main service may be configured to emit events to all connected clients, so that a user may choose to filter events in accordance with the preferences of the user.

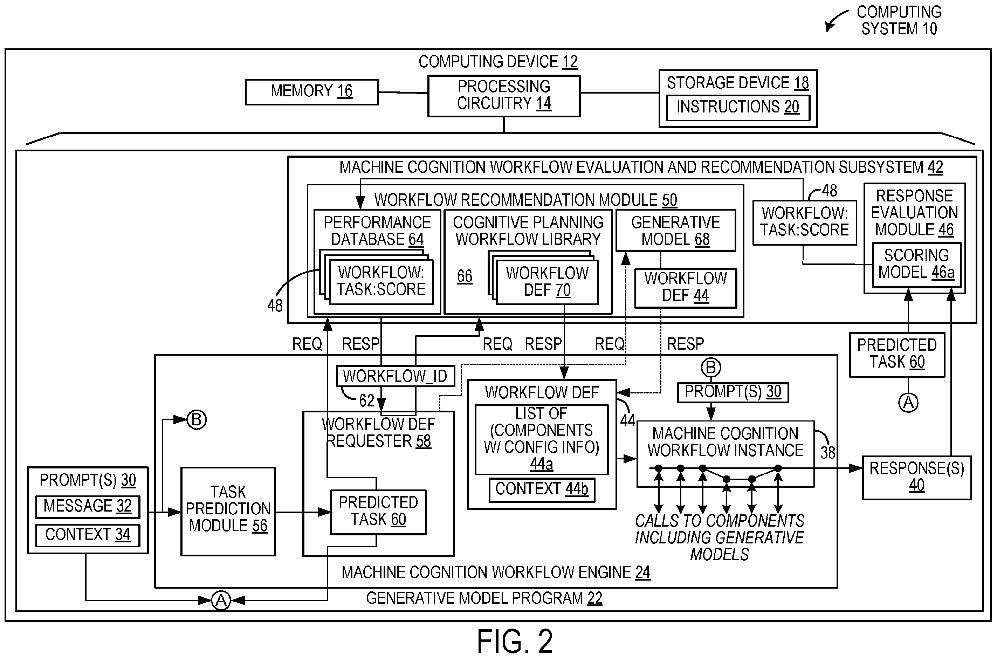

Turning to Fig. 2, a detailed view of the processes performed by the machine cognition workflow engine 24 and the machine cognition workflow evaluation and recommendation subsystem 42 is illustrated. A task prediction module 56 of the workflow engine 24 receives a prompt 30 including the extracted message 32 and the extracted context 34 as input, and generates a predicted task 60, which is received by a workflow definition requester 58 of the workflow engine 24. The task prediction module 56 is configured to generate the predicted task 60 which is to be accomplished by the prompt 30. The workflow definition requester 58 sends the predicted task 60 to a performance database 64 of the workflow recommendation module 50 as a request for a recommended workflow definition 44 for the predicted task 60, and receives a workflow identifier 62 as a response. Based on the workflow identifier 62, the workflow recommendation module 50 determines the recommended workflow definition 44 for the predicted task 60 among a plurality of workflow definitions 70. The performance database 64 may be configured to respond by returning the workflow identifier 62 for the recommended workflow definition 44 or with an indication that no recommendation is able to be made.

In the workflow recommendation module 50, the recommended workflow definition 44 may be determined by comparing the predicted task 60 to existing tasks in the performance database 64 storing workflow identifiers associated with respective workflow instances along with a respective plurality of tasks and scores 48 as performance data. In other words, the recommended workflow definition 44 may be determined by comparing the predicted task 60 to existing tasks in the performance database 64 storing the existing tasks associated with respective workflow definitions. When a task associated with a score 48 matches the predicted task 60, and the score 48 is greater than a predetermined threshold, then the workflow identifier 62 associated with the score 48 is returned to the workflow definition requester 58. The workflow identifier 62 is then used by a cognitive planning workflow library 66 of the workflow recommendation module 50 to retrieve the recommended workflow definition 44 among the workflow definitions 70 stored in the workflow library 66.

The performance database 64 may be generated by compiling a plurality of scores 48 which are each associated with a workflow and a task. These scores 48 may be generated by a scoring model 46a of the response evaluation module 46 which is configured to evaluate pairs of predicted tasks 60 and responses 40, and generate scores based on the proximity of the response 40 to the predicted output of the predicted task 60. The scoring model 46a may be a trained machine learning score model that has been trained to generate a score which scores a degree to which the response 40 has accomplished the task 60. The scoring model 46a may receive the prompt 30, the predicted task 60, and the response 40 as input, and generate as output a score 48 indicating a degree to which the task 60 was completed by the response 40.

When the existing tasks in the performance database 64 and the workflow definitions 70 stored in the workflow library 66 include tasks and workflows which execute generative models, including LLMs, these tasks and workflows may represent problem solving strategies and templates for the LLMs. To select a prior optimal problem solving strategy that worked in a prior instance, a matching workflow definition 44 may be selected using the score 48 that is generated by the scoring model 46a.

Additionally or alternatively, in the workflow recommendation module 50, the recommended workflow definition 44 may be determined by a generative model 68 which receives the predicted task 60 as input, and generates a recommended workflow definition 44 based on the inputted predicted task 60. The workflow definition requester may be configured such that, when the performance database 64 responds with an indication that no recommendation is able to be made, the workflow definition requester requests the generative model 68 to generate a recommended workflow definition 44, and in response receive the generated recommended workflow definition 44. The generative model 68 may be a large language model or a multi-modal model, for example. The multi-modal model may be configured to receive and process inputs in multiple modes such as textual data, image data, and audio data, as discussed above.

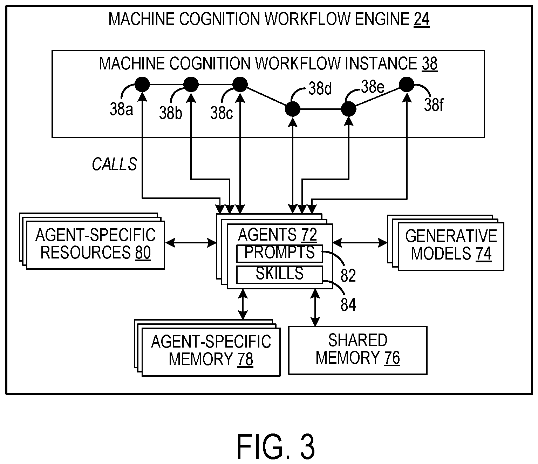

Turning to Fig. 3, a plurality of calls to software components by the workflow instance are depicted. Components 38a-d within a workflow instance 38 interact with various agent services 72.

Each component 38a-f in the workflow instance 38 is configured to make calls to the specialized agent services 72. These calls initiate the execution of specific tasks within the workflow instance 38. For instance, these calls may include further executing generative models 74 (LLMs, for example) to obtain task completion and/or responses. To fulfill tasks, which may include data analysis, natural language processing, or image recognition capabilities, a component 38a-f may call upon an agent service 72 that possesses the requisite skills 84.

Agent services 72 may not only be skill-specific, but also be configured to generate prompts 82 to send to generative models 74. This feature enables a dynamic and responsive system where each agent service 72 can request information or processing from a generative model 74, so that at least one of the components 38a-f interfaces with a generative model 74. For example, an agent service 72 specializing in data analytics may generate a prompt 82 requesting a generative model 74 to analyze a complex set of data and return insights.

Each agent service 72 may be designed with its own set of skills determining the type of executable tasks. For instance, one agent service 72 may be configured to process numerical data, while another may be configured to handle linguistic analysis.

Each agent service 72 may retrieve agent-specific resources 80, which may include tools, databases, or software that a particular agent service 72 can access. These resources 80 are tailored to the skills 84 of the agent service 72. For example, an agent service 72 focused on language translation may have access to extensive linguistic databases in the agent-specific resources 80.

Each agent service 72 may be equipped with agent-specific memory 78 which allows the agent 72 to store and recall information relevant to its tasks. For instance, an agent 72 specializing in user interactions may remember past user preferences to provide a more personalized experience.

In contrast to agent-specific memory 78, shared memory 76 is a common resource accessible by all agent services 72 within the workflow instance 38. This shared memory 76 facilitates the exchange and storage of information that is relevant across different agents 72, thereby ensuring coherence and continuity in the workflow instance 38, as agents can access and update shared data.

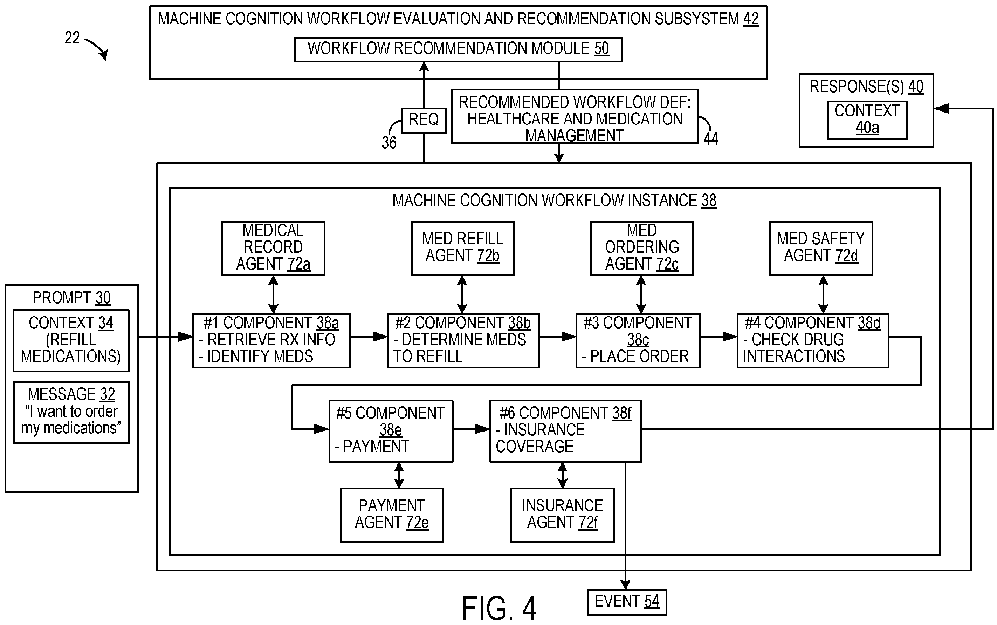

Referring to Fig. 4, an exemplary practical application of the machine cognition workflow engine of Figs. 1 and 2 is described in which a user submits a prompt 30 with a message 32 stating an intent to order medications. This example demonstrates the intricate and collaborative nature of the workflow components 38a-f of the workflow instance 38 in handling a complex task like medication ordering.

Initially, the user enters a prompt 30, from which a message 32 and a context 34 is extracted. The message 32 indicates that the user wants to order medications, and the extracted context 34 is that the user wants to refill medications.

Upon receiving the user's prompt 30 about medication ordering, the machine cognition workflow engine 24, through its task prediction module 56, identifies this as a predicted task 60 related to healthcare and medication management, and sends a request 36 for a recommended workflow definition 44 to the workflow recommendation module 50 of the recommendation subsystem 42. Consequently, the workflow engine 24 retrieves a specialized recommended workflow definition 44 related to healthcare and medication management and designed for medication ordering, which has been recommended by the workflow recommendation module 50 based on the proximity of the predicted task 60 to the task of healthcare and medication management.

The first component 38a in the workflow instance 38 is responsible for retrieving the patient's current prescription information. This component 38a interfaces with a medical record agent 72a to access the patient's medical records, securely stored and managed within the system 10, to identify the specific medications prescribed to the user. This step ensures that the process is personalized and accurate, catering to the individual needs of the user.

Following the retrieval of the prescription, the second component 38b in the workflow instance 38 takes charge of identifying which medication needs refilling. This involves interfaces with a medication refill agent 72b to analyze the prescription data, understanding the dosage, frequency, and the last refill date to determine if any medication is due for a refill.

Subsequently, the third component 38c interacts with a medication ordering agent 72c to interface with an external prescription drug ordering portal. This component 38c is responsible for placing an order for the medication identified for refilling. The third component 38c ensures that the correct medication, dosage, and quantity are accurately conveyed to the pharmacy or drug distributor.

The fourth component 38d interfaces with a medication safety agent 72d to check for potential cross-interactions with other medications the patient is currently taking and assesses any known drug allergies. This step is vital for ensuring patient safety and avoiding adverse drug interactions.

The workflow instance 38 also includes a fifth component 38e and a sixth component 38f dedicated to managing the financial aspects of the medication refill. The fifth component 38e interacts with a payment agent 72e to handle the payment process, ensuring a secure and efficient transaction. The sixth component 38f interacts with an insurance agent 72f to deal with insurance coverage, verifying if the medication is covered under the patient's insurance plan.

Once the entire medication ordering process is completed, an event 54 is emitted back to the interaction interface 28 to inform the user that the medication ordering process has been completed. The workflow instance 38 then outputs a response 40 with a context object 40a, which includes details such as the confirmation of the order, expected delivery date, and any relevant instructions or information.

This example showcases the comprehensive capabilities of the machine cognition workflow engine 24, where multiple components 38a-f work in unison to execute a complex task like medication ordering. Each component 3 8a-f plays a specific role, from accessing medical records to managing payments, ensuring a seamless and efficient process to refill medications in accordance with a user prompt.

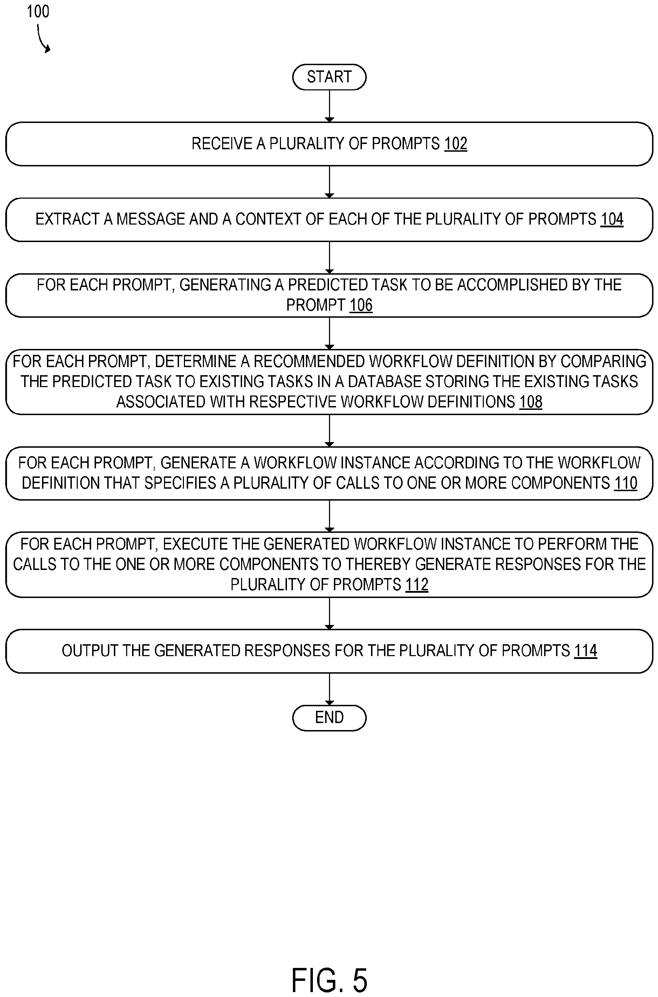

Fig. 5 is a flowchart that illustrates a first method 100 for managing workflows. The first method 100 may be implemented on the computing system 10 illustrated in Figs. 1 or 2 above, which include processing circuitry and associated memory configured to implement an interaction interface, a machine cognition workflow engine, and a machine cognition workflow evaluation and recommendation subsystem. Alternatively, other suitable computing hardware and software may be utilized.

At 102, the method includes receiving a plurality of prompts. At 104, the method includes extracting a message and a context of each of the plurality of prompts. At 106, the method includes, for each prompt, generating a predicted task to be accomplished by the prompt. At 108, the method includes, for each prompt, determining a recommended workflow definition by comparing the predicted task to existing tasks in a database storing the existing tasks associated with respective workflow definitions.

At 110, the method includes, for each prompt, generating a workflow instance according to the recommended workflow definition that specifies a plurality of calls to one or more components. At 112, the method includes, for each prompt, executing the generated workflow instance to perform the calls to the one or more components to thereby generate responses for the plurality of prompts. At 114, the method includes outputting the generated responses for the plurality of prompts.

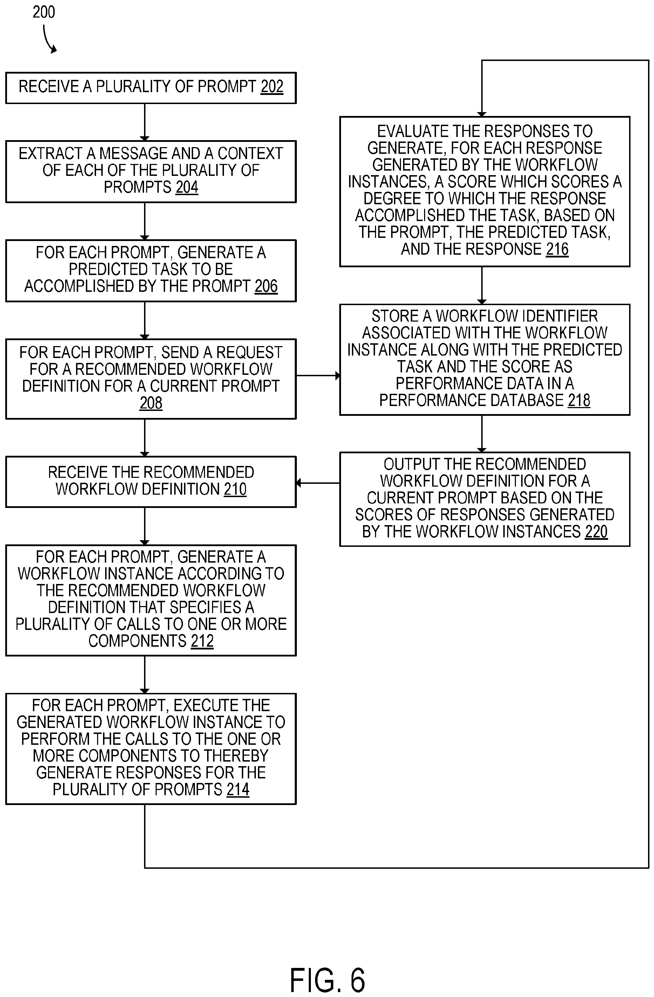

Fig. 6 is a flowchart that illustrates a second method 200 for managing workflows. The first method 200 may be implemented on the computing system 10 illustrated in Figs. 1 or 2 above, which include processing circuitry and associated memory configured to implement an interaction interface, a machine cognition workflow engine, and a machine cognition workflow evaluation and recommendation subsystem. Alternatively, other suitable computing hardware and software may be utilized.

At 202, the method includes receiving a plurality of prompts. At 204, the method includes extracting a message and a context of each of the plurality of prompts. At 206, the method includes, for each prompt, generating a predicted task to be accomplished by the prompt. At 208, the method includes, for each prompt, sending a request for a recommended workflow definition for a current prompt. At 210, the method includes receiving the recommended workflow definition. At 212, the method includes, for each prompt, generating a workflow instance according to the recommended workflow definition that specifies a plurality of calls to one or more components.

At 214, the method includes, for each prompt, executing the generated workflow instance to perform the calls to the one or more components to thereby generate responses for the plurality of prompts. At 216, the method includes evaluating the responses to generate, for each response generated by the workflow instances, a score which scores a degree to which the response accomplished the task, based on the prompt, the predicted task, and the response.

At 218, the method includes storing a workflow identifier associated with the workflow instance along with the predicted task and the score as performance data in a performance database. The request for a recommended workflow definition sent at 208 may be received at 218.

At 220, the method includes outputting the recommended workflow definition for a current prompt based on the scores of responses generated by the workflow instances. The recommended workflow definition outputted at 220 may be received at 210.

The above-described system and methods may significantly address the shortcomings of conventional online chatbots by introducing a dynamic and adaptive approach to user interaction and task fulfillment. The above-described machine cognition workflow evaluation and recommendation subsystem evaluates responses from past executions of workflows based on user prompts, so that the degree to which the responses accomplished the tasks requested by the user in the user prompts is monitored. This allows the system to incorporate a feedback mechanism to understand which strategies and responses were the most effective at fulfilling the tasks associated with the user prompts. By learning from past interactions, the system can retrieve appropriate workflow definitions for predicted tasks to generate more accurate and user-tailored responses in future user interactions.

In some embodiments, the methods and processes described herein may be tied to a computing system of one or more computing devices. In particular, such methods and processes may be implemented as a computer-application program or service, an application-programming interface (API), a library, and/or other computer-program product.

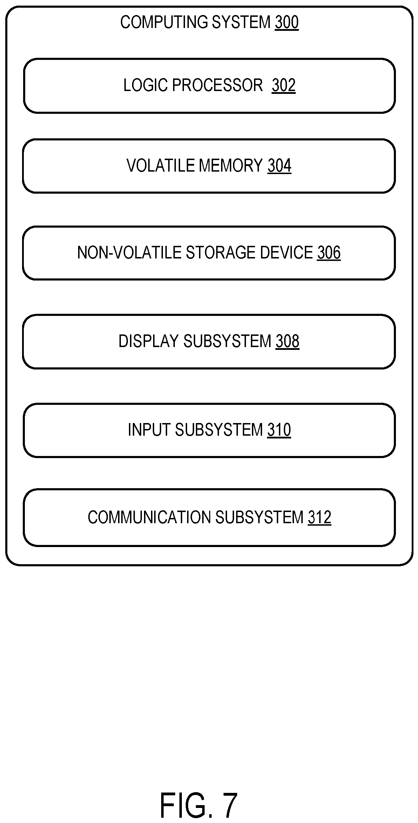

Fig. 7 schematically shows a non-limiting embodiment of a computing system 300 that can enact one or more of the methods and processes described above. Computing system 300 is shown in simplified form. Computing system 300 may embody the computing system 10 described above and illustrated in Fig. 1 and 2, respectively. Components of computing system 300 may be included in one or more personal computers, server computers, tablet computers, home-entertainment computers, network computing devices, video game devices, mobile computing devices, mobile communication devices (for example, smartphone), and/or other computing devices, and wearable computing devices such as smart wristwatches and head mounted augmented reality devices.

Computing system 300 includes processing circuitry 302, volatile memory 304, and a non-volatile storage device 306. Computing system 300 may optionally include a display subsystem 308, input subsystem 310, communication subsystem 312, and/or other components not shown in Fig. 7.

Processing circuitry typically includes one or more logic processors, which are physical devices configured to execute instructions. For example, the logic processors may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors configured to execute software instructions. Additionally or alternatively, the logic processor may include one or more hardware logic circuits or firmware devices configured to execute hardware-implemented logic or firmware instructions. Processors of the processing circuitry 302 may be single-core or multi-core, and the instructions executed thereon may be configured for sequential, parallel, and/or distributed processing. Individual components of the processing circuitry optionally may be distributed among two or more separate devices, which may be remotely located and/or configured for coordinated processing. For example, aspects of the computing system disclosed herein may be virtualized and executed by remotely accessible, networked computing devices configured in a cloud-computing configuration. In such a case, these virtualized aspects are run on different physical logic processors of various different machines, it will be understood. These different physical logic processors of the different machines will be understood to be collectively encompassed by processing circuitry 302.

Non-volatile storage device 306 includes one or more physical devices configured to hold instructions executable by the processing circuitry to implement the methods and processes described herein. When such methods and processes are implemented, the state of non-volatile storage device 306 may be transformed-e.g., to hold different data.

Non-volatile storage device 306 may include physical devices that are removable and/or built in. Non-volatile storage device 306 may include optical memory, semiconductor memory, and/or magnetic memory, or other mass storage device technology. Non-volatile storage device 306 may include nonvolatile, dynamic, static, read/write, read-only, sequential-access, location-addressable, file-addressable, and/or content-addressable devices. It will be appreciated that non-volatile storage device 306 is configured to hold instructions even when power is cut to the non-volatile storage device 306.

Volatile memory 304 may include physical devices that include random access memory. Volatile memory 304 is typically utilized by processing circuitry 302 to temporarily store information during processing of software instructions. It will be appreciated that volatile memory 304 typically does not continue to store instructions when power is cut to the volatile memory 304.

Aspects of processing circuitry 302, volatile memory 304, and non-volatile storage device 306 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 300 typically implemented in software by a processor to perform a particular function using portions of volatile memory, which function involves transformative processing that specially configures the processor to perform the function. Thus, a module, program, or engine may be instantiated via processing circuitry 302 executing instructions held by non-volatile storage device 306, using portions of volatile memory 304. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included display subsystem 308 may be used to present a visual representation of data held by non-volatile storage device 306. The visual representation may take the form of a GUI. As the herein described methods and processes change the data held by the non-volatile storage device, and thus transform the state of the non-volatile storage device, the state of display subsystem 308 may likewise be transformed to visually represent changes in the underlying data. Display subsystem 308 may include one or more display devices utilizing virtually any type of technology. Such display devices may be combined with processing circuitry 302, volatile memory 304, and/or non-volatile storage device 306 in a shared enclosure, or such display devices may be peripheral display devices.

When included, input subsystem 310 may comprise or interface with one or more user-input devices such as a keyboard, mouse, touch screen, camera, or microphone.

When included, communication subsystem 312 may be configured to communicatively couple various computing devices described herein with each other, and with other devices. Communication subsystem 312 may include wired and/or wireless communication devices compatible with one or more different communication protocols. As non-limiting examples, the communication subsystem may be configured for communication via a wired or wireless local- or wide-area network, broadband cellular network, etc. In some embodiments, the communication subsystem may allow computing system 300 to send and/or receive messages to and/or from other devices via a network such as the Internet.

The following paragraphs provide additional support for the claims of the subject application. One aspect provides a computing system, comprising a machine cognition workflow engine configured to receive a plurality of prompts, extract a message and a context of each of the plurality of prompts, for each prompt, generate a workflow instance according to a recommended workflow definition that specifies a plurality of calls to one or more components, and for each prompt, execute the generated workflow instance to perform the calls to the one or more components to thereby generate responses for the plurality of prompts, and a machine cognition workflow evaluation and recommendation subsystem including a response evaluation module configured to evaluate the responses to generate a score for each response generated by the workflow instances, and a workflow recommendation module configured to receive a request from the machine cognition workflow engine for a recommended workflow definition for a current prompt, and output the recommended workflow definition to the machine cognition workflow engine based on the scores of the responses generated by the workflow instances. In this aspect, additionally or alternatively, the machine cognition workflow engine may include a task prediction module configured to generate a predicted task to be accomplished by the prompt. In this aspect, additionally or alternatively, the response evaluation module may include a trained machine learning scoring model that has been trained to generate a score which scores a degree to which the response accomplished the task, the trained machine learning scoring model receiving as input the prompt, the predicted task, and the response, and generating as output the score which scores the degree to which the task was completed by the response. In this aspect, additionally or alternatively, a workflow identifier associated with the workflow instance may be stored along with the predicted task and the score as performance data in a performance database. In this aspect, additionally or alternatively, the machine cognition workflow engine may include a workflow definition requester configured to receive the predicted task from the task prediction module and send a request to the performance database of the workflow recommendation module for the recommended workflow definition for the predicted task. In this aspect, additionally or alternatively, the performance database may be configured to respond by returning the workflow identifier for the recommended workflow definition or with an indication that no recommendation is able to be made. In this aspect, additionally or alternatively, when the performance database responds with the indication that no recommendation is able to be made, the workflow recommendation requester may be configured to request a generative model of the workflow recommendation module to generate the recommended workflow definition, and in response receive the generated workflow definition. In this aspect, additionally or alternatively, the workflow definition may include a sequence of the components to be executed by the workflow engine, the context of the prompt being passed to each component in the sequence of the components in the workflow instance. In this aspect, additionally or alternatively, at least one of the one or more components may interface with a generative model via an agent service. In this aspect, additionally or alternatively, at least one of the one or more components may be configured to emit an event to notify a progress of the workflow instance.

Another aspect provides a computing method, comprising receiving a plurality of prompts, extracting a message and a context of each of the plurality of prompts, for each prompt, generating a workflow instance according to a recommended workflow definition that specifies a plurality of calls to one or more components, for each prompt, executing the generated workflow instance to perform the calls to the one or more components to thereby generate responses for the plurality of prompts, evaluating the responses to generate a score for each response generated by the workflow instances, and outputting the recommended workflow definition for a current prompt based on the scores of the responses generated by the workflow instances. In this aspect, additionally or alternatively, the computing method may further comprise generating a predicted task to be accomplished by the prompt. In this aspect, additionally or alternatively, the computing method may further comprise determining the recommended workflow definition by comparing the predicted task to existing tasks in a database storing the existing tasks associated with respective workflow definitions. In this aspect, additionally or alternatively, a workflow identifier associated with the workflow instance may be stored along with the predicted task as performance data in a performance database. In this aspect, additionally or alternatively, the performance database may be configured to return the workflow identifier for the recommended workflow definition or with an indication that no recommendation is able to be made. In this aspect, additionally or alternatively, when the performance database responds with the indication that no recommendation is able to be made, a request may be sent to a generative model to generate the recommended workflow definition. In this aspect, additionally or alternatively, the workflow definition may include a sequence of the components, the context of the prompt being passed to each component in the sequence of the components in the workflow instance. In this aspect, additionally or alternatively, at least one of the one or more components may interface with a generative model via an agent service.

Another aspect provides a computing system, comprising processing circuitry, and a storage device storing a program executable by the processing circuitry to receive a prompt, extract a message and a context of the prompt, generate a predicted task based on the message and the context of the prompt, determine a recommended workflow definition by comparing the predicted task to existing tasks in a database storing the existing tasks associated with respective workflow definitions, generate a workflow instance for the prompt according to the recommended workflow definition that specifies a plurality of calls to one or more components, execute the generated workflow instance to perform the calls to the one or more components to thereby generate a response for the prompt, and output the generated response for the prompt. In this aspect, additionally or alternatively, the prompt may include multi-modal inputs or content.

A further aspect provides a machine cognition workflow engine and a recommendation subsystem in a computing system. The workflow engine receives a plurality of prompts, extracts a message and a context of each of the plurality of prompts, for each prompt, generates a workflow instance according to a recommended workflow definition that specifies a plurality of calls to one or more components, and for each prompt, executes the generated workflow instance to perform the calls to the one or more components to thereby generate responses for the plurality of prompts. The recommendation subsystem evaluates the responses to generate a score for each response generated by the workflow instances, receives a request from the machine cognition workflow engine for the recommended workflow definition for a current prompt, and outputs the recommended workflow definition to the machine cognition workflow engine based on the scores of responses generated by the workflow instances.

"And/or" as used herein is defined as the inclusive or ∨, as specified by the following truth table:

| A | B | A ∨ B |
|---|---|---|
| True | True | True |
| True | False | True |
| False | True | True |
| False | False | False |

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A computing system (10), comprising:
a machine cognition workflow engine (24) configured to:
receive a plurality of prompts (30);
extract a message (32) and a context (34) of each of the plurality of prompts (30);
for each prompt (30), generate a workflow instance (38) according to a recommended workflow definition (44) that specifies a plurality of calls to one or more components (38a-d); and
for each prompt (30), execute the generated workflow instance (38) to perform the calls to the one or more components (38a-d) to thereby generate responses (40) for the plurality of prompts (30); and
a machine cognition workflow evaluation and recommendation subsystem (42) including:
a response evaluation module (46) configured to evaluate the responses (40) to generate a score (48) for each response (40) generated by the workflow instances (38); and
a workflow recommendation module (50) configured to receive a request (36) from the machine cognition workflow engine (24) for a recommended workflow definition (44) for a current prompt (30), and output the recommended workflow definition (44) to the machine cognition workflow engine (24) based on the scores (48) of the responses (40) generated by the workflow instances (38).

2. The computing system of claim 1, wherein the machine cognition workflow engine includes a task prediction module configured to generate a predicted task to be accomplished by the prompt.

3. The computing system of claim 2, wherein the response evaluation module includes a trained machine learning scoring model that has been trained to generate a score which scores a degree to which the response accomplished the task, the trained machine learning scoring model receiving as input the prompt, the predicted task, and the response, and generating as output the score which scores the degree to which the task was completed by the response.

4. The computing system of claim 3, wherein a workflow identifier associated with the workflow instance is stored along with the predicted task and the score as performance data in a performance database.

5. The computing system of claim 3 or 4, wherein the machine cognition workflow engine includes a workflow definition requester configured to receive the predicted task from the task prediction module and send a request to the performance database of the workflow recommendation module for the recommended workflow definition for the predicted task.

6. The computing system of claim 5, wherein the performance database is configured to respond by returning the workflow identifier for the recommended workflow definition or with an indication that no recommendation is able to be made.

7. The computing system of claim 6, wherein when the performance database responds with the indication that no recommendation is able to be made, the workflow recommendation requester is configured to request a generative model of the workflow recommendation module to generate the recommended workflow definition, and in response receive the generated workflow definition.

8. The computing system of any of the preceding claims, wherein the workflow definition includes a sequence of the components to be executed by the workflow engine, the context of the prompt being passed to each component in the sequence of the components in the workflow instance.

9. The computing system of any of the preceding claims, wherein at least one of the one or more components interfaces with a generative model via an agent service.

10. The computing system of any of the preceding claims, wherein at least one of the one or more components is configured to emit an event to notify a progress of the workflow instance.

11. A computing method (100), comprising:
receiving a plurality of prompts (30);
extracting a message (32) and a context (34) of each of the plurality of prompts (30);
for each prompt (30), generating a workflow instance (38) according to a recommended workflow definition (44) that specifies a plurality of calls to one or more components (38a-d);
for each prompt (30), executing the generated workflow instance (38) to perform the calls to the one or more components (38a-d) to thereby generate responses (40) for the plurality of prompts (30);
evaluating the responses (40) to generate a score (48) for each response (40) generated by the workflow instances (38); and
outputting the recommended workflow definition (44) for a current prompt (30) based on the scores (48) of the responses (40) generated by the workflow instances (38).

12. The computing method of claim 11, further comprising generating a predicted task to be accomplished by the prompt.

13. The computing method of claim 12, further comprising determining the recommended workflow definition by comparing the predicted task to existing tasks in a database storing the existing tasks associated with respective workflow definitions.

14. The computing method of claim 13, wherein a workflow identifier associated with the workflow instance is stored along with the predicted task as performance data in a performance database.

15. A computing system (10), comprising:
processing circuitry (14); and
a storage device (18) storing a program (22) executable by the processing circuitry (14) to:
receive a prompt (30);
extract a message (32) and a context (34) of the prompt (30);
generate a predicted task (60) based on the message (32) and the context (34) of the prompt (30);
determine a recommended workflow definition (44) by comparing the predicted task (60) to existing tasks in a database (64) storing the existing tasks associated with respective workflow definitions (70);
generate a workflow instance (38) for the prompt (30) according to the recommended workflow definition (44) that specifies a plurality of calls to one or more components (38a);
execute the generated workflow instance (38) to perform the calls to the one or more components (38a) to thereby generate a response (40) for the prompt (30); and
output the generated response (40) for the prompt (30).
